# EUROPÄISCHE PATENTSCHRIFT

(11) **EP 2 781 367 B1**
(45) Veröffentlichungstag und Bekanntmachung des Hinweises auf die Patenterteilung: **14.12.2016**
(21) Anmeldenummer: 13159770.0
(22) Anmeldetag: 18.03.2013
(51) Int. Cl.: B60C 9/00, D02G 3/48, D02G 3/02

(54) **Verstärkungslage für Gegenstände aus elastomerem Material, vorzugsweise für Fahrzeugluftreifen und Fahrzeugluftreifen**
Reinforcing ply for objects made of elastomer material, preferably for pneumatic vehicle tires and pneumatic vehicle tire
Nappe de renforcement pour objets composés de matériau élastomère, de préférence pour pneus de véhicule et pneu de véhicule

(43) Veröffentlichungstag der Anmeldung: 24.09.2014
(73) Patentinhaber: Continental Reifen Deutschland GmbH, 30165 Hannover (DE)
(72) Erfinder: Justine, Dr. Carole, 31535 Scharrel (DE); Kramer, Dr. Thomas, 32049 Herford (DE); Wahl, Dr. Günter, 31249 Hohenhameln/Clauen (DE)

(56) Entgegenhaltungen:
- EP-A2- 2 065 225
- WO-A1-2012/069955
- US-A1- 2010 065 178

## Beschreibung

Die Erfindung betrifft eine gummierte Verstärkungslage für Gegenstände aus elastomerem Material, vorzugsweise für Fahrzeugluftreifen, wobei die Verstärkungslage eine Vielzahl an parallelen und beabstandet zueinander angeordneten Festigkeitsträgern aufweist, wobei die Festigkeitsträger Hybridkorde aus wenigstens zwei miteinander verdrehten Multifilamentgarnen sind, wobei das erste Multifilamentgarn ein Viskose-Multifilamentgarn ist und wobei das weitere Multifilamentgarn ein Nicht-metallisches-Multifilamentgarn ist, welches aus Material besteht, das nicht mit dem ersten Multifilamentgarn identisch ist. Die Erfindung betrifft ferner einen Fahrzeugluftreifen, enthaltend diese Verstärkungslage.

Verstärkungslagen für Gegenstände aus elastomerem Material wie beispielsweise technische Gummiprodukte und Fahrzeug(luft)reifen haben größte Bedeutung und sind dem Fachmann im Allgemeinen bekannt. Die Verstärkungslagen weisen eine Vielzahl an verstärkenden, fadenförmigen Elementen, den sogenannten Festigkeitsträgern, auf. Diese sind vollständig in elastomeres Material eingebettet. Die Festigkeitsträger dieser Verstärkungslagen weisen beispielsweise die Form von Geweben oder kalandrierten, endlos gespulten Festigkeitsträgern auf.

Bestehen die Festigkeitsträger aus wenigstens zwei Garnen aus je unterschiedlichen Materialen, so nennt man diese Festigkeitsträger Hybridkorde. Durch die Verwendung eines Hybridkordes ist es ermöglicht, die physikalischen Eigenschaften des Festigkeitsträgers einerseits durch gezielte Materialauswahl der einzelnen Garne und andererseits durch deren Konstruktion einzustellen.

Die gummierten Verstärkungslagen geeigneter Größe und Ausbildung werden mit weiteren Bauteilen zusammengefügt, um ein technisches Gummiprodukt oder einen Fahrzeugluftreifen zu bilden. Dabei verstärken die gummierten Verstärkungslagen das betreffende Produkt.

Eine vorgenannte Verstärkungslage ist beispielsweise aus der DE 10 2009 003 359 A1 bekannt geworden. Die Verstärkungslage ist eine Gürtelbandage eines Fahrzeugluftreifens, welche als Festigkeitsträger Hybridkorde aus zwei Garnen, einem Rayon-Multifilamentgarn und einem PET-Multifilamentgarn, aufweist. Das Rayon-Multifilamentgarn zählt zu den Viskose-Multifilamentgarnen. Der Garntiter des Rayon-Multifilamentgarnes beträgt 1840 dtex, der Garntiter des PET-Multifilamentgarnes beträgt 1440 dtex. Der Hybridkord weist einen bisher üblichen Durchmesser auf. Die Durchmesser der Festigkeitsträger bestimmen maßgeblich die Dicke der diese Festigkeitsträger einbettenden Verstärkungslage. Festigkeitsträger mit geringem Durchmesser erlauben vergleichsweise dünnere Verstärkungslagen als Festigkeitsträger mit größerem Durchmesser.

Eine vorgenannte Verstärkungslage ist ebenfalls aus der US 2010/065178 A1, der WO 2012/069955 A1 sowie der EP 2 065 225 A2 bekannt.

Man ist jedoch aus Gründen der Kostenersparnis bestrebt, Verstärkungslagen mit verringerter Dicke in Elastomerprodukten einzusetzen, wobei die Verstärkungslagen jedoch in etwa gleich physikalische Eigenschaften wie Verstärkungslagen mit bisher üblicher Dicke aufweisen sollen. Weiterhin ist man zum Schutze der Umwelt bestrebt, möglichst natürliche, nachwachsende Rohstoffe für die Festigkeitsträger dieser Verstärkungslagen zu verwenden.

Es ist daher die Aufgabe der Erfindung, eine vergleichsweise dünne Verstärkungslage für Gegenstände aus elastomerem Material bereitzustellen, welche umweltfreundlich gestaltet ist und deren physikalische Eigenschaften in etwa gleich zu bisher verwendeten Verstärkungslagen mit synthetischen Festigkeitsträgern sind. Es ist ferner die Aufgabe der Erfindung, einen Fahrzeugluftreifen bereitzustellen, der umweltfreundlich gestaltet ist und einen vergleichsweise geringen Rollwiderstand aufweist.

Die Aufgabe wird in Bezug auf die Verstärkungslage dadurch gelöst, dass das Viskose-Multifilamentgarn ein Rayon- oder ein Lyocell-Multifilamentgarn ist und dass dieses im Normklima gemäß DIN EN ISO 139-1:2005 konditioniert wurde und danach einen Garntiter < 1100 dtex und eine Bruchfestigkeit von ≥ 45 cN/tex aufweist sowie dass der Hybridkord einen Kordtiter ≤ 3000 dtex aufweist.

Es ist eine vergleichsweise dünne Verstärkungslage geschaffen, deren Festigkeitsträger ein Hybridfestigkeitsträger aus wenigstens zwei Multifilamentgarnen ist, von denen ein Garn ein Rayon-Multifilamentgarn oder ein Lyocell-Multifilamentgarn ist. Der Kordtiter beträgt ≤ 3000 dtex, wodurch ein vergleichsweise dünner Hybridkord und somit eine vergleichsweise dünne Verstärkungslage ermöglicht ist. Viskose-Multifilamentgarne sind mit dem sog. "Viskose-Verfahren" aus Cellulose erhaltbar. Cellulose ist das weltweit häufigste und bedeutsamste natürliche, nachwachsende und somit umweltfreundliche Polymer. Bisher mussten dicke Festigkeitsträger mit Viskose- bzw. Rayon-Multifilamentgarnen mit einem Garntiter > 1840 dtex in gummierten Verstärkungslagen im Reifen eingesetzt werden, um die für den Einsatz notwendige Bruchfestigkeit zu erhalten. Es ist nun aufgrund eines modifizierten Herstellverfahrens des Viskose-Garnes ermöglicht, ein dünnes Viskose-Multifilamentgarn mit einer für Viskose überraschend hohen Bruchfestigkeit von ≥ 45 cN/tex herzustellen. Überraschenderweise eignet sich eine Verstärkungslage mit Hybridkorden, welche wenigstens ein Viskose-Multifilamentgarn mit einem Garntiter < 1100 dtex aufweisen, hervorragend für die Verwendung in technischen Gummiprodukten, insbesondere in Fahrzeug(luft)reifen.
Die erfindungsgemäße Verstärkungslage erfüllt insbesondere in Bezug auf Bruchkraft, E-Modul, Ermüdungsbeständigkeit und Bruchdehnung die Anforderungen für den Einsatz insbesondere im Fahrzeugluftreifen.

Der Hybridkord der erfindungsgemäßen Verstärkungslage kann aus zwei oder mehr Multifilamentgarnen bestehen, von denen ein erstes Multifilamentgarn immer ein vorbeschriebenes "dünnes" Viskose-Multifilamentgarn ist, von denen ein zweites Multifilamentgarn immer aus einem Material besteht, das nicht mit dem ersten Multifilamentgarn identisch ist. Der Hybridkord kann jedoch auch drei oder mehr Multifilamentgarne aufweisen, von denen ein drittes Multifilamentgarn oder weiteres Multifilamentgarn mit dem Material des ersten oder zweiten Multifilamentgarns identisch sein oder aber aus einem weiteren nicht-metallischen Material bestehen kann.

Die Messung der konditionierten textilen Daten des Viskose-Multifilamentgarns erfolgt gemäß DIN EN ISO 2062:2009 unter folgenden Bedingungen:
- Konditionierungszeiten von ≥ 16 h im Normalklima
- CRE [constant rate of extension = konstante Dehngeschwindigkeit]-Zugprüfmaschine mit pneumatischen Klemmen
- Prüfung von Multifilamentgarnen mit Schutzdrall 100 t/m (t/m = turns/m = Umdrehungen pro Meter)
- Einspannlänge der Prüfstücke: 500 mm
- Zuggeschwindigkeit (Traversengeschwindigkeit): 500 mm/min (100 %/min)

Die in den vorstehend genannten Normen erwähnten Konditionierungs- und Prüfbedingungen sind vergleichbar mit der einschlägigen Norm der Chemiefaserindustrie (BISFA "Testing methods for viscose, cupro, acetate, triacetate and lyocell filament yarns", 2007 Edition).

Das Viskose-Multifilamentgarn wird überraschenderweise dadurch erhalten, dass das in Beispiel 2 der GB 685,631 beschriebene Verfahren hinsichtlich mehrerer technischer Merkmale abgeändert wird, die im Folgenden beschrieben werden.
- Anstelle von Baumwoll-Linters wurden Zellstoffe aus Nadelholz eingesetzt.
- Es werden vor dem Spinnprozess Viskose-Modifikatoren (z.B. Aminethoxylate wie ethoxylierte Fettsäureamine oder Polyethylenglykole wie PEG 1500) in einer Konzentration im Bereich von 0,01 bis 1,0 Gew.-% bezogen auf Viskose zugesetzt.
- Es werden Spinndüsen mit Lochdurchmesser < 100 µm verwendet, vorzugsweise mit einem Lochdurchmesser im Bereich von 40 bis 80 µm.
- Die Spinngeschwindigkeit an der ersten Aufnahmerolle beträgt weniger als 50 m/min und liegt vorzugsweise im Bereich von 10 bis 40 m/min.
- Der Transport des Fadens aus der Spinndüse in das Koagulationsbad erfolgt durch ein Spinnrohr, wobei der Transport des Fadens im Spinnrohr durch eine Strömung des Koagulationsbads in Richtung des Faserabzugs unterstützt wird.
- Die Schwefelsäurekonzentration im Koagulationsbad ist größer als 15 g/Liter und liegt vorzugsweise im Bereich von 20 bis 120 g/Liter.
- Dem Koagulationsbad werden Natriumsulfat und Zinksulfat zugesetzt, vorzugsweise in einer Konzentration von 25 bis 250 g/LiterKoagulationsbad.
- Die Temperatur des Koagulationsbads beträgt mehr als 30 °C und liegt vorzugsweise im Bereich von 40 bis 95 °C.
- Das nachgelagerte Fixierbad enthält Schwefelsäure, vorzugsweise in einer Konzentration im Bereich von 20 bis 120 g/LiterFixierbad und dient auch als Zersetzungsbad für Cellulosexanthogenat.
- Das ersponnene Garn wird stärker als auf 175 % verstreckt, vorzugsweise liegt die Verstreckung in einem Bereich von 180 bis 220 %.
- Das erfindungsgemäße Viskose-Multifilamentgarn wird vorzugsweise in einem Zweistufenprozess hergestellt, wobei in der ersten Stufe das Garn ersponnen und aufgewickelt und in der zweiten Stufen das aufgewickelte Garn abgewickelt und verstreckt wird.

Vorteilhaft ist es, wenn das weitere Multifilamentgarn einen Garntiter im Bereich von ≥ 50 und ≤ 1800 dtex, vorzugsweise im Bereich von ≥ 200 und ≤ 1200 dtex, besonders bevorzugt im Bereich von ≥ 250 und ≤ 800 dtex aufweist. Es ist eine vergleichsweise dünne Verstärkungslage mit Hybridkorden geschaffen, deren Garne jeweils einen geringen Garntiter und somit einen geringen Gesamtkorddurchmesser aufweisen, deren physikalische Eigenschaften jedoch in etwa denen von Hybridkorden mit heute üblichen Durchmessern entsprechen.

Vorteilhaft ist es, wenn der Hybridkord einen Kordtiter ≤ 2500 dtex, bevorzugt ≤ 2000 dtex aufweist.

Vorteilhaft ist es, wenn das Viskose-Multifilamentgarn einen Garntiter im Bereich von ≥ 150 dtex bis < 1100 dtex, bevorzugt im Bereich von ≥ 170 dtex bis < 900 dtex und eine Bruchfestigkeit im Bereich von ≥ 45 cN/tex bis ≤ 60 cN/tex, bevorzugt im Bereich von ≥ 45 cN/tex bis ≤ 56 cN/tex aufweist. Die hohe Bruchfestigkeit pro dtex erlaubt in Bezug auf die Bruchkraft einen dünnen Garntiter.

Zweckmäßig ist es, wenn das Viskose-Multifilamentgarn einen Garntiter im Bereich von ≥ 170 dtex bis < 900 dtex, vorzugsweise von ≥ 200 dtex bis < 800 dtex und eine Bruchfestigkeit im Bereich von ≥ 45 cN/tex bis ≤ 56 cN/tex, vorzugsweise von ≥ 45 cN/tex bis ≤ 53 cN/tex aufweist. Hierdurch werden Vorteile in Bezug auf die Ermüdungseigenschaften eines Fahrzeugluftreifens, der die erfindungsgemäße Verstärkungslage als Karkasslage und/oder als Gürtelbandage einsetzt, sowie in Bezug auf die Prozessfähigkeit der Verstärkungslagenherstellung erzielt.

Vorteilhaft in Bezug auf die Ermüdungsbeständigkeit eines Fahrzeugluftreifens, der die erfindungsgemäße Verstärkungslage als Karkasslage und/oder als Gürtelbandage einsetzt, ist es, wenn das Viskose-Multifilamentgarn einen Filament-Titer im Bereich von 1,2 und 4,0 dtex, vorzugsweise von 2,4 und 3,0 dtex aufweist.

Zweckmäßig ist es, wenn das Viskose-Multifilamentgarn eine Bruchdehnung im Bereich von ≥ 5 % und ≤ 20 %, vorzugsweise von ≥ 6% und ≤ 15 % aufweist. Ein technisches Gummiprodukt oder ein Fahrzeugluftreifen mit einer derartigen Verstärkungslage als Karkasslage und/oder als Gürtelbandage ist ermüdungsbeständiger, auch bei extremen Bedingungen wie Bordsteinkontakten und/oder besonders für HighSpeed-Verwendungen geeignet.

In einer Ausführung der Erfindung ist das weitere Nicht-metallische Multifilamentgarn ein Aramid-Multifilamentgarn und/oder ein Polyamid-Multifilamentgarn, vorzugsweise ein PA66-Multifilamentgarn. Es ist ein höherer E-Modul und geringerer Schrumpf sowie eine höhere Stabilität bei geringerem Korddurchmesser als beispielsweise bei einer Kordkonstruktion PA66 940 x 2 erreicht.

In einer ersten, bevorzugten Ausführung der Erfindung weist die Verstärkungslage einen Hybridkord aus zwei Multifilamentgarnen auf, von denen das erste Multifilamentgarn ein Rayon-Multifilamentgarn ist und von denen das weitere Multifilamentgarn ein PA66-Multifilamentgarn ist und wobei der Hybridkord die Konstruktion Rayon 780x1 + PA66 700x1, vorzugsweise verdreht mit 450 tpm S(Z) + 450 tpm S(Z), 450 tpm Z(S) aufweist. Die Filamente eines jeden Rayon-Multifilamentgarnes weisen einen Filament-Titer von 3 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6% und ≤ 15 % auf. Der Hybridkord weist einen Durchmesser von 0,48 mm auf. Weitere Parameter des Hybridkordes sind der Tabelle 1 zu entnehmen. Die Hybridkorde sind in einer Dichte von 60 bis 190 epdm, vorzugsweise in einer Dichte von 120 bis 170 epdm in der Verstärkungslage, welche bevorzugt eine Gürtelbandage ist, angeordnet.

In einer zweiten, bevorzugten Ausführung der Erfindung weist die Verstärkungslage einen Hybridkord aus ebenfalls zwei Multifilamentgarnen auf, von denen das erste Multifilamentgarn ein Rayon-Multifilamentgarn ist und von denen das weitere Multifilamentgarn ein Aramid-Multifilamentgarn ist und wobei der Hybridkord die Konstruktion Rayon 620x1 + Aramid 550x1, vorzugsweise verdreht mit 600 tpm S(Z) + 600 tpm S(Z), 600 tpm Z(S) aufweist. Die Filamente eines jeden Rayon-Multifilamentgarnes weisen einen Filament-Titer von 2,4 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6% und ≤ 15 % auf. Der Hybridkord weist einen Durchmesser von 0,40 mm auf. Weitere Parameter des Hybridkordes sind der Tabelle 1 zu entnehmen. Die Hybridkorde sind in einer Dichte von 60 bis 210 epdm, vorzugsweise in einer Dichte von 150 bis 200 epdm in der Verstärkungslage angeordnet.

In einer dritten, bevorzugten Ausführung der Erfindung weist die Verstärkungslage einen Hybridkord aus drei Multifilamentgarnen auf, von denen das erste Multifilamentgarn ein Rayon-Multifilamentgarn ist, von denen das zweite Multifilamentgarn ein Aramid-Multifilamentgarn ist und von denen das dritte Multifilamentgarn ein mit dem ersten Multifilamentgarn identisches Rayon-Multifilamentgarn ist, wobei der Hybridkord die Konstruktion Rayon 620x1 + Aramid 550x1 + Rayon 620x1, vorzugsweise verdreht mit 600 tpm S(Z) + 600 tpm S(Z), 600 tpm Z(S) aufweist. Die Filamente eines jeden Rayon-Multifilamentgarnes weisen einen Filament-Titer von 2,4 dtex auf. Die Bruchfestigkeit eines Rayon-Multifilamentgarnes liegt im Bereich von ≥ 45 cN/tex bis ≤ 53 cN/tex. Jedes Rayon-Multifilamentgarn weist eine Bruchdehnung im Bereich von ≥ 6% und ≤ 15 % auf. Der Hybridkord weist einen Durchmesser von 0,50 mm auf. Weitere Parameter des Hybridkordes sind der Tabelle 1 zu entnehmen. Die Hybridkorde sind in einer Dichte von 60 bis 190 epdm, vorzugsweise in einer Dichte von 120 bis 170 epdm in der Verstärkungslage angeordnet.

Vorteilhaft ist es, wenn der Hybridkord in einer Dichte von 60 epdm bis 280 epdm in der Verstärkungslage angeordnet ist.

"epdm" bedeutet ends per decimeter und beschreibt die Korddichte in der Verstärkungslage.

Abgesehen davon unterliegt die Art oder Aufmachung der cellulosischen Fasern keinen Beschränkungen. So kann das Viskose-Multifilamentgarn als solches oder als Faserkurzschnitt zu einem Festigkeitsträger, zu einem Gewebe oder Gewirke verarbeitet sein. Auch ist es möglich, den das Viskose-Multifilamentgarn enthaltenden Festigkeitsträger direkt zur Herstellung eines Reifens einzusetzen.

Die Erfindung wird in Bezug auf den Fahrzeugluftreifen gelöst, indem dieser eine vorbeschriebene gummierte Verstärkungslage aufweist.

Hierbei ist die Verstärkungslage insbesondere eine Karkasse und/oder eine Gürtelbandage und/oder ein Wulstverstärker.

Die nachfolgende Tabelle 1 gibt eine beispielhafte Übersicht von Hybridkorden, die in der erfindungsgemäßen Verstärkungslage eingesetzt werden und deren Dichte in dieser Verstärkungslage in epdm.

**Tab. 1**

| **Beispiel/Parameter** | **1** | **2** | **3** |
|---|---|---|---|
| Material | Rayon + PA66 | Rayon + Aramid | Rayon + Aramid + Rayon |
| Kordkonstruktion | 780x1+700x1 | 620x1+550x1 | 620x1+550x1+620x1 |
| Drehungen [Tpm] | 450 | 600 | 600 |
| Dichte [epdm] | 80 | 150 | 170 |
| Kord-Bruchkraft [kN/dm] | 5,8 | 15,6 | 19,6 |
| Bruchdehnung [%] | 10 | 6,6 | 8,5 |
| Durchmesser [mm] | 0,48 | 0,40 | 0,50 |

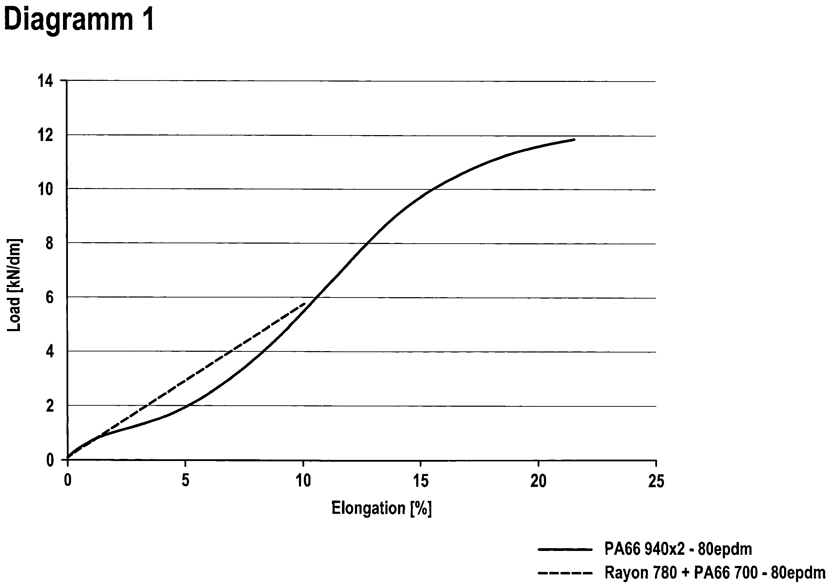

Das nachfolgende Diagramm 1 zeigt Kraft-Dehnungskurven von zwei ungummierten Geweben in kN/dm, wobei ein Gewebe den in Tabelle 1 beschriebenen Hybridkordes 1 (Rayon 780 + PA66 700) und das andere Gewebe einen Kord des Standes der Technik (PA66 940x2) aufweist. "e" steht in der Legende für epdm.

Der Hybridkord 1 wird beispielsweise bevorzugt als Gewebe in der Verstärkungslage Gürtelbandage eines Fahrzeugluftreifens eingesetzt. Der E-Modul des Hybridkordes ist durch das Rayon-Multifilamentgarn vorteilhafterweise vergleichsweise hoch, während PA66 für den für die Gürtelbandagenanwendung notwendigen Schrumpf-Effekt verantwortlich ist.
Die Verbesserung des Rollwiderstandes eines Fahrzeugluftreifens mit der erfindungsgemäßen Verstärkungslage liegt trotz höherer Korddichte zwischen 1% bis 3%, ist jedoch abhängig von der Reifendimension und der Reifenkonstruktion.

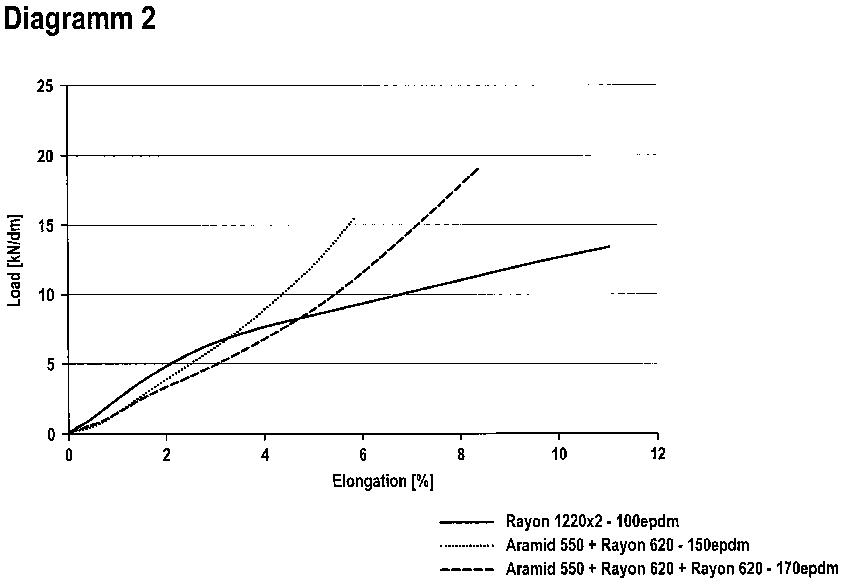

Das nachfolgende Diagramm 2 zeigt Kraft-Dehnungskurven von drei ungummierten Geweben in kN/dm, wobei ein Gewebe den in Tabelle 1 beschriebenen Hybridkordes 2 (Rayon 620 + Aramid 550), ein weiteres Gewebe den in Tabelle 1 beschreibenen Hybridkord 3 (Rayon 620 + Aramid 550 + Rayon 620) und das dritte Gewebe einen Kord des Standes der Technik (Rayon 1220 x 2) aufweist. "e" steht in der Legende für epdm.

Die Kraft-Dehnungs-Messungen sind in Anlehnung an die ASTM D885 durchgeführt. Die Hybridkorde 2 und 3 werden beispielsweise bevorzugt in Geweben in der Verstärkungslage Karkasse eines Fahrzeugluftreifens eingesetzt. Der E-Modul des Hybridkordes ist durch das Rayon-Multifilamentgarn vorteilhafterweise vergleichsweise hoch, während Aramid für eine vorteilhaft hohe Gesamtbruchkraft mit verantwortlich ist. Die Verbesserung des Rollwiderstandes eines Fahrzeugluftreifens mit der erfindungsgemäßen Verstärkungslage liegt trotz höherer Korddichte zwischen 2% bis 4%, ist jedoch abhängig von der Reifendimension und der Reifenkonstruktion.

## Patentansprüche

1. Gummierte Verstärkungslage für Gegenstände aus elastomerem Material, vorzugsweise für Fahrzeugreifen, wobei die Verstärkungslage eine Vielzahl an parallelen und beabstandet zueinander angeordneten Festigkeitsträgern aufweist, wobei die Festigkeitsträger Hybridkorde aus wenigstens zwei miteinander verdrehten Multifilamentgarnen sind, wobei das erste Multifilamentgarn ein Viskose-Multifilamentgarn ist und wobei das weitere Multifilamentgarn ein Nicht-metallisches-Multifilamentgarn ist, welches aus Material besteht, das nicht mit dem ersten Multifilamentgarn identisch ist, **dadurch gekennzeichnet, dass** das Viskose-Multifilamentgarn ein Rayon- oder ein Lyocell-Multifilamentgarn ist und dass dieses im Normklima gemäß DIN EN ISO 139-1:2005 konditioniert wurde und danach einen Garntiter < 1100 dtex und eine Bruchfestigkeit von ≥ 45 cN/tex aufweist sowie dass der Hybridkord einen Kordtiter ≤ 3000 dtex aufweist.

2. Gummierte Verstärkungslage gemäß Anspruch 1, **dadurch gekennzeichnet, dass** das weitere Multifilamentgarn einen Garntiter im Bereich von ≥ 50 und ≤ 1800 dtex, vorzugsweise im Bereich von ≥ 200 und ≤ 1200 dtex, besonders bevorzugt im Bereich von ≥ 250 und ≤ 800 dtex aufweist.

3. Gummierte Verstärkungslage gemäß Anspruch 1 oder 2, **dadurch gekennzeichnet, dass** der Hybridkord einen Kordtiter ≤ 2500 dtex, bevorzugt ≤ 2000 dtex aufweist.

4. Gummierte Verstärkungslage gemäß einem oder mehreren der vorangehenden Ansprüche, **dadurch gekennzeichnet, dass** das Viskose-Multifilamentgarn einen Garntiter im Bereich von150 dtex bis < 1100 dtex, bevorzugt im Bereich von ≥ 170 dtex bis < 900 dtex und eine Bruchfestigkeit im Bereich von ≥ 45 cN/tex bis ≤ 60 cN/tex, bevorzugt im Bereich von ≥ 45 cN/tex bis ≤ 56 cN/tex aufweist.

5. Gummierte Verstärkungslage gemäß Anspruch 4, **dadurch gekennzeichnet, dass** das Viskose-Multifilamentgarn einen Garntiter im Bereich von ≥ 200 dtex bis < 800 dtex und eine Bruchfestigkeit im Bereich von ≥ 45 cN/tex bis ≤ 53 cN/tex aufweist.

6. Gummierte Verstärkungslage nach einem oder mehreren der Ansprüche 1 bis 5, **dadurch gekennzeichnet, dass** das Viskose-Multifilamentgarn einen Filament-Titer im Bereich von 1,2 und 4,0 dtex, bevorzugt im Bereich von 2,4 und 3,0 dtex aufweist.

7. Gummierte Verstärkungslage gemäß einem oder mehreren der Ansprüche 1 bis 6, **dadurch gekennzeichnet, dass** das Viskose-Multifilamentgarn eine Bruchdehnung im Bereich von > 5 % und ≤ 20 %, bevorzugt im Bereich von ≥ 6 % und ≤ 15 % aufweist.

8. Gummierte Verstärkungslage gemäß einem oder mehreren der vorangehenden Ansprüche, **dadurch gekennzeichnet, dass** das weitere Nicht-metallische Multifilamentgarn ein Aramid-Multifilamentgarn und/oder ein Polyamid-Multifilamentgarn, vorzugsweise ein PA66-Multifilamentgarn ist.

9. Gummierte Verstärkungslage gemäß einem oder mehreren der vorangehenden Ansprüche 1 bis 6, **dadurch gekennzeichnet, dass** das weitere Nicht-metallische Multifilamentgarn ein Polyester-Multifilamentgarn, vorzugsweise ein PET-Multifilamentgarn, besonders bevorzugt ein High Modulus Low Shrinkage-PET-Multifilamentgarn ist.

10. Gummierte Verstärkungslage gemäß einem oder mehreren der vorangehenden Ansprüche, **dadurch gekennzeichnet, dass** das erste Viskose-Multifilamentgarn ein Rayon-Multifilamentgarn ist und dass das weitere Multifilamentgarn ein PA66-Multifilamentgarn ist, wobei der Hybridkord die Konstruktion Rayon 780x1 + PA66 700x1, vorzugsweise verdreht mit 450 tpm S(Z) + 450 tpm S(Z), 450 tpm Z(S) aufweist.

11. Gummierte Verstärkungslage gemäß einem oder mehreren der vorangehenden Ansprüche, **dadurch gekennzeichnet, dass** das erste Viskose-Multifilamentgarn ein Rayon-Multifilamentgarn ist und dass das weitere Multifilamentgarn ein Aramid-Multifilamentgarn ist, wobei der Hybridkord die Konstruktion Rayon 620x1 + Aramid 550x1, vorzugsweise verdreht mit 600 tpm S(Z) + 600 tpm S(Z), 600 tpm Z(S) aufweist.

12. Gummierte Verstärkungslage gemäß einem oder mehreren der vorangehenden Ansprüche, **dadurch gekennzeichnet, dass** das erste Viskose-Multifilamentgarn ein Rayon-Multifilamentgarn ist, dass das zweite Multifilamentgarn ein Aramid-Multifilamentgarn ist und dass das dritte Multifilamentgarn ein mit dem ersten Multifilamentgarn identisches Rayon-Multifilamentgarn ist, wobei der Hybridkord die Konstruktion Rayon 620x1 + Aramid 550x1 + Rayon 620x1, vorzugsweise verdreht mit 600 tpm S(Z) + 600 tpm S(Z), 600 tpm Z(S) aufweist.

13. Fahrzeugluftreifen, welcher mindestens eine Verstärkungslage nach einem oder nach mehreren der vorangehenden Ansprüche aufweist.

14. Fahrzeugluftreifen nach Anspruch 13, **dadurch gekennzeichnet, dass** die Verstärkungslage eine Karkasse und/oder eine Gürtelbandage und/oder ein Wulstverstärker ist.

## Claims

1. Rubberized reinforcement ply for articles made of an elastomeric material, preferably for vehicle tires, wherein the reinforcement ply comprises a multiplicity of mutually spaced-apart strength members in a parallel arrangement, wherein the strength members are hybrid cords composed of at least two multifilament yarns twisted with one another, the first multifilament yarn being a viscose multifilament yarn and the further multifilament yarn being a nonmetallic multifilament yarn which consists of material not identical with the first multifilament yarn, **characterized in that** the viscose multifilament yarn is a rayon multifilament yarn or a lyocell multifilament yarn and **in that** said yarn after conditioning in a DIN EN ISO 139-1:2005 standard atmosphere has a yarn linear density < 1100 dtex and a tenacity of ≥ 45 cN/tex and also in that the hybrid cord has a cord linear density ≤ 3000 dtex.

2. Rubberized reinforcement ply according to Claim 1, **characterized in that** the further multifilament yarn has a yarn linear density in the range of ≥ 50 and ≤ 1800 dtex, preferably in the range of ≥ 200 and 1200 dtex, more preferably in the range of ≥ 250 and ≤ 800 dtex.

3. Rubberized reinforcement ply according to Claim 1 or 2, **characterized in that** the hybrid cord has a cord linear density ≤ 2500 dtex, preferably ≤ 2000 dtex.

4. Rubberized reinforcement ply according to one or more of the preceding claims, **characterized in that** the viscose multifilament yarn has a yarn linear density in the range of ≥ 150 dtex to < 1100 dtex, preferably in the range of ≥ 170 dtex to < 900 dtex and a tenacity in the range of ≥ 45 cN/tex to ≤ 60 cN/tex, preferably in the range of ≥ 45 cN/tex to ≥ 56 cN/tex.

5. Rubberized reinforcement ply according to Claim 4, **characterized in that** the viscose multifilament yarn has a yarn linear density in the range of ≥ 200 dtex to < 800 and a tenacity in the range of ≥ 45 cN/tex to ≤ 53 cN/tex.

6. Rubberized reinforcement ply according to one or more of Claims 1 to 5, **characterized in that** the viscose multifilament yarn has a filament linear density in the range of 1.2 and 4.0 dtex, preferably in the range of 2.4 and 3.0 dtex.

7. Rubberized reinforcement ply according to one or more of Claims 1 to 6, **characterized in that** the viscose multifilament yarn has an elongation at break in the range of ≥ 5% and ≤ 20%, preferably in the range of ≥ 6% and ≤ 15%.

8. Rubberized reinforcement ply according to one or more of the preceding claims, **characterized in that** the further nonmetallic multifilament yarn is an aramid multifilament yarn and/or a polyamide multifilament yarn, preferably a PA66 multifilament yarn.

9. Rubberized reinforcement ply according to one or more of preceding Claims 1 to 6, **characterized in that** the further nonmetallic multifilament yarn is a polyester multifilament yarn, preferably a PET multifilament yarn, more preferably a high modulus low shrinkage PET multifilament yarn.

10. Rubberized reinforcement ply according to one or more of the preceding claims, **characterized in that** the first viscose multifilament yarn is a rayon multifilament yarn and **in that** the further multifilament yarn is a PA66 multifilament yarn, the construction of the hybrid cord being rayon 780x1 + PA66 700x1, preferably twisted with 450 tpm S(Z) + 450 tpm S(Z), 450 tpm Z(S).

11. Rubberized reinforcement ply according to one or more of the preceding claims, **characterized in that** the first viscose multifilament yarn is a rayon multifilament yarn and **in that** the further multifilament yarn is an aramid multifilament yarn, the construction of the hybrid cord being rayon 620×1 + aramid 550x1, preferably twisted with 600 tpm S(Z) + 600 tpm S(Z), 600 tpm Z(S).

12. Rubberized reinforcement ply according to one or more of the preceding claims, **characterized in that** the first viscose multifilament yarn is a rayon multifilament yarn, **in that** the second multifilament yarn is an aramid multifilament yarn, and **in that** the third multifilament yarn is a rayon multifilament yarn identical with the first multifilament yarn, the construction of the hybrid cord being rayon 620x1 + aramid 550x1 + rayon 620x1, preferably twisted with 600 tpm S(Z) + 600 tpm S(Z), 600 tpm Z(S).

13. Pneumatic vehicle tire comprising at least one reinforcement ply according to one or more of the preceding claims.

14. Pneumatic vehicle tire according to Claim 13, **characterized in that** the reinforcement ply is a carcass and/or a belt bandage and/or a bead reinforcer.

## Revendications

1. Couche caoutchoutée de renfort pour objets en matériau élastomère, de préférence pour bandages pneumatiques de roue de véhicule,
la couche de renfort présentant plusieurs renforts disposés en parallèle et à distance les uns des autres,
les renforts étant des câbles hybrides constitués d'au moins deux fils multifilaments torsadés l'un avec l'autre,
le premier fil multifilament étant un fil multifilament de viscose et l'autre fil multifilament un fil multifilament non métallique constitué d'un matériau qui n'est pas identique à celui du premier fil multifilament,
**caractérisée en ce que**
le fil multifilament de viscose est un fil multifilament de rayonne ou de Lyocell,
**en ce qu'**il a été conditionné dans le climat normalisé selon DIN EN ISO 139-1:2005 et présente ensuite un titre < 1100 dtex et une résistance à la rupture ≥ 45 cN/tex et
**en ce que** le câble hybride présente un titre de ≤ 3000 dtex.

2. Couche caoutchoutée de renfort selon la revendication 1, **caractérisée en ce que** l'autre fil multifilament présente un titre compris dans la plage de ≥ 50 à ≤ 1800 dtex, de préférence dans la plage de ≥ 200 à ≤ 1200 dtex et de façon particulièrement préférable dans la plage de ≥ 250 à ≤ 800 dtex.

3. Couche caoutchoutée de renfort selon les revendications 1 ou 2, **caractérisée en ce que** le câble hybride présente un titre ≤ 2500 dtex et de préférence ≤ 2000 dtex.

4. Couche caoutchoutée de renfort selon l'une ou plusieurs des revendications précédentes, **caractérisée en ce que** le fil multifilament de viscose présente un titre compris dans la plage de ≥ 150 dtex à < 1100 dtex et de préférence dans la plage de ≥ 170 dtex à < 900 et une résistance à la rupture comprise dans la plage de ≥ 45 N/tex à ≤ 60 cN/tex et de préférence dans la plage de ≥ 45 cN/tex à ≤ 56 cN/tex.

5. Couche caoutchoutée de renfort selon la revendication 4, **caractérisée en ce que** le fil multifilament de viscose présente un titre compris dans la plage de ≥ 200 dtex à > 800 dtex et une résistance à la rupture dans la plage de ≥ 45 cN/tex à ≤ 53 cN/tex.

6. Couche caoutchoutée de renfort selon l'une ou plusieurs des revendications 1 à 5, **caractérisée en ce que** le fil multifilament de viscose présente des filaments d'un titre compris dans la plage de 1,2 à 4,0 dtex et de préférence dans la plage de 2,4 à 3,0 dtex.

7. Couche caoutchoutée de renfort selon l'une ou plusieurs des revendications 1 à 6, **caractérisée en ce que** le fil multifilament de viscose présente un allongement à la rupture compris dans la plage de ≥ 5 % à ≤ 20 % et de préférence dans la plage de ≥ 6 % à ≤ 15 %.

8. Couche caoutchoutée de renfort selon l'une ou plusieurs des revendications précédentes, **caractérisée en ce que** l'autre fil multifilament non métallique est un fil multifilament d'aramide ou un fil multifilament de polyamide et de préférence un fil multifilament de PA66.

9. Couche caoutchoutée de renfort selon l'une ou plusieurs des revendications 1 à 6, **caractérisée en ce que** l'autre fil multifilament non métallique est un fil multifilament de polyester, de préférence un fil multifilament de PET et de façon particulièrement préférable un fil multifilament de PET à haut module et faible retrait.

10. Couche caoutchoutée de renfort selon l'une ou plusieurs des revendications précédentes, **caractérisée en ce que** le premier fil multifilament de viscose est un fil multifilament de rayonne et **en ce que** l'autre fil multifilament est un fil multifilament de PA66, le câble hybride présentant la structure rayonne 780x1 + PA66 700x1 de préférence torsadée à 450 tpm S(Z) + 450 tpm S(Z), 450 tpm Z(S).

11. Couche caoutchoutée de renfort selon l'une ou plusieurs des revendications précédentes, **caractérisée en ce que** le premier fil multifilament de viscose est un fil multifilament de rayonne et **en ce que** l'autre fil multifilament est un fil multifilament d'aramide, le câble hybride présentant la structure rayonne 620x1 + aramide 550x1, de préférence torsadée à 600 tpm S(Z) + 600 tpm S(Z), 600 tpm Z(S).

12. Couche caoutchoutée de renfort selon l'une ou plusieurs des revendications précédentes, **caractérisée en ce que** le premier fil multifilament de viscose est un fil multifilament de rayonne, **en ce que** le deuxième fil multifilament est un fil multifilament d'aramide et **en ce que** le troisième fil multifilament est un fil multifilament de rayonne identique au premier fil multifilament, le câble hybride présentant la structure rayonne 620x1 + aramide 550x1 + rayonne 620x1, de préférence torsadée à 600 tpm S(Z) + 600 tpm S(Z), 600 tpm Z(S).

13. Bandage pneumatique pour roue de véhicule, qui présente au moins une couche de renfort selon l'une ou plusieurs des revendications précédentes.

14. Bandage pneumatique pour roue de véhicule selon la revendication 13, **caractérisé en ce que** la couche de renfort est une carcasse, un bandage de ceinture et/ou un renfort de bourrelet.
